# EUROPEAN PATENT APPLICATION

(11) **EP 4 667 146 A1**
(43) Date of publication of application: **24.12.2025**
(21) Application number: 25159852.0
(22) Date of filing: 25.02.2025
(51) Int. Cl.: B23D 57/02, B23D 59/00, B27B 17/00, B27B 17/02

(54) **CHAINSAW**

(30) Priority: 21.06.2024 JP 2024100097
(71) Applicant: Yamabiko Corporation, Ohme-shi, Tokyo 198-8760 (JP)
(72) Inventor: UEDA, Shunsuke, Ohme-shi, Tokyo, 1988760 (JP); TAKANO, Kota, Ohme-shi, Tokyo, 1988760 (JP); NISHIMURA, Atsushi, Ohme-shi, Tokyo, 1988760 (JP); UEDA, Satoshi, Ohme-shi, Tokyo, 1988760 (JP)
(74) Representative: Winter, Brandl - Partnerschaft mbB

(57) **Abstract**

To provide a chainsaw, enabling to remove sawdust conveyed inside a main body efficiently, which has a main body including: a guide bar; a saw chain wound around the guide bar and the drive sprocket; a drive sprocket disposed behind the guide bar, having a rotation shaft in a right/left direction of the main body and rotated to move the saw chain along the guide bar; and a guide wall including an arcuate first wall along the drive sprocket with a predetermined gap from the saw chain and a second wall extended rearward via a connecting portion to the first wall, and when seen from the right/left direction, a angle between: a first direction along a vertical direction of the main body; and a second direction passing through the center of the rotation shaft and an apex of the connecting portion is between 0° and 30°.

## Description

### CROSS REFERENCE TO RELATED APPLICATIONS

The present application claims priority under 35 U.S.C. §119 to Japanese Patent Application No. 2024-100097, filed June 21, 2024, the contents of which are incorporated herein by reference in their entirety. The present disclosure relates to a chainsaw.

### RELATED ART

JP 2008-514454 A discloses a configuration having through holes which penetrate a rim sprocket to facilitate wood chip removal during a wood cutting operation.

However, the conventional technology disclosed in Patent Document 1 still has room for improvement.

In the light of the above-described circumstances, the present disclosure provides a chainsaw which can remove sawdust conveyed into an interior of a main body by the saw chain more efficiently.

According to an aspect of the present disclosure, a chainsaw, comprising a main body, wherein the main body includes a guide bar, a saw chain, a drive sprocket and a guide wall, the saw chain is wound around the guide bar and the drive sprocket, the drive sprocket is configured to: be disposed behind the guide bar and have a rotation shaft in a right/left direction of the main body; and move the saw chain along the guide bar by being rotated, the guide wall includes a first wall and a second wall, wherein the first wall is a wall that is provided arcuately along the drive sprocket, and is disposed with a predetermined gap between the saw chain and the first wall, the second wall is a wall that is extended rearward via a connecting portion to the first wall, and, when seen from the right/left direction, an angle between: a first direction passing through a center of the rotation shaft along a vertical direction of the main body; and a second direction passing through the center of the rotation shaft and an apex of the connecting portion is 0° or more and 30° or less is provided.

According to such an aspect, sawdust conveyed into the interior of the main body by the saw chain can be removed more efficiently.

### BRIEF DESCRIPTION OF DRAWINGS

FIG. 1 is a right side view illustrating external appearance of a chainsaw.
FIG. 2 is a left side view illustrating the external appearance of the chainsaw.
FIG. 3 is a top view illustrating the chainsaw with some components omitted.
FIG. 4 is an enlarged perspective view of the chainsaw seen from rear and below for explaining an opening.
FIG. 5 is a view of the main body, which is cut along a cross-section A-A of FIG. 3 and seen from a right side, for explaining an angle θ1.
FIG. 6 is a view of the main body, which is cut along the cross-section A-A of FIG. 3 and seen from the right side, for explaining an angle θ2.
FIG. 7 is a left side view illustrating external appearance of a sprocket cover.
FIG. 8 is a view of the main body, which is cut along the cross-section A-A of FIG. 3 and seen from the right side, for explaining a predetermined gap.
FIG. 9 is a view of the main body, which is cut along the cross-section A-A of FIG. 3 and seen from the right side, for explaining an example of a condition of use.
FIG. 10 is a photograph showing a condition of discharging sawdust CW conveyed into an interior of the main body in Example.
FIG. 11 is a photograph showing a condition of discharging sawdust CW conveyed into the interior of the main body in Comparative Example 1.

### DETAILED DESCRIPTION

Hereinafter, an example of an embodiment of the present disclosure will be described with reference to the drawings. The various features shown in the following embodiment can be combined with each other.

### Overall configuration

Chapter 1 provides explanation of a chainsaw 1 according to one embodiment. The chainsaw 1 is a work machine for cutting, processing or the like (hereinafter, simply referred to as "cutting") a work target such as wood, branches and the like (hereinafter simply referred to as a "work target"), which employs, for example, a motor or an engine as a power source. Hereinafter, the chainsaw 1 employing a motor as the power source will be described as an example.

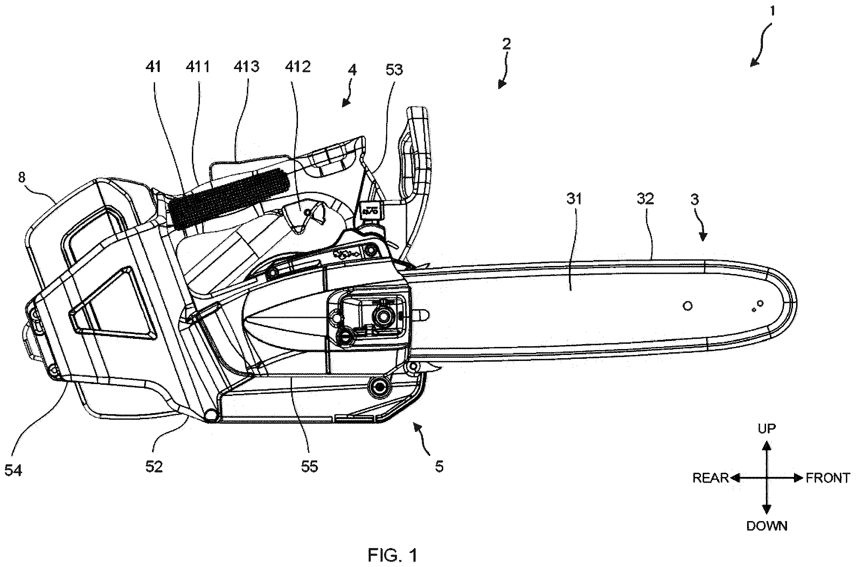

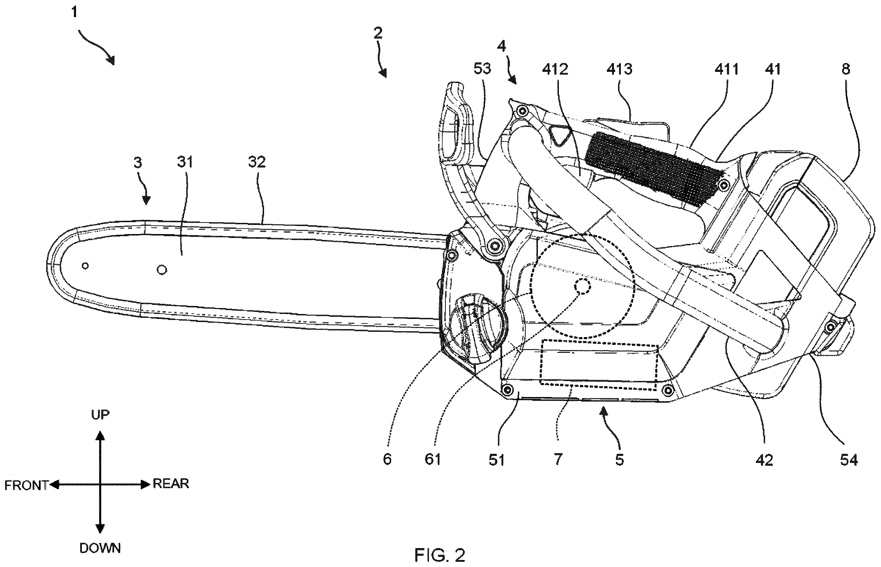

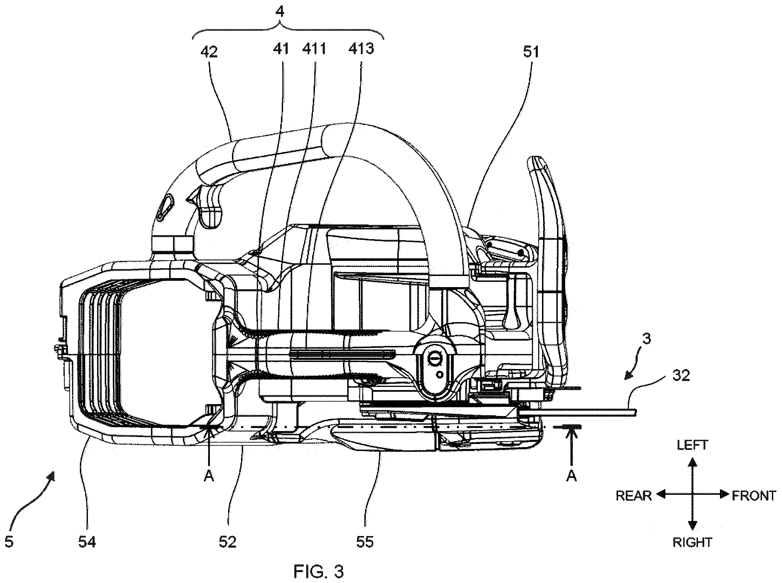

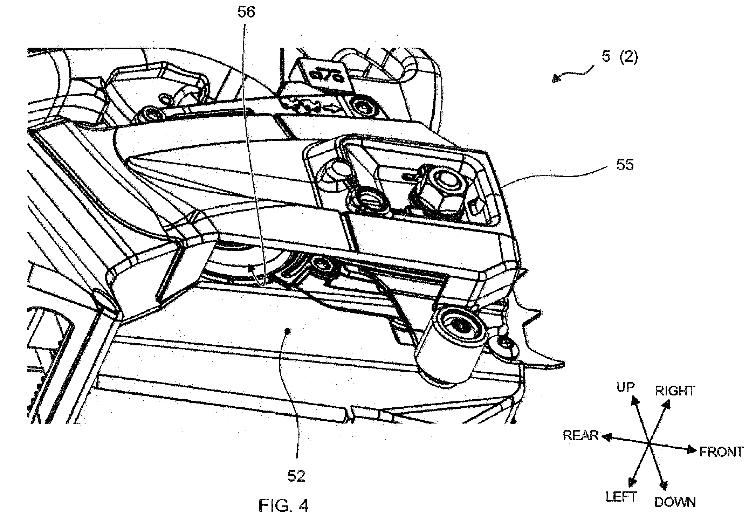

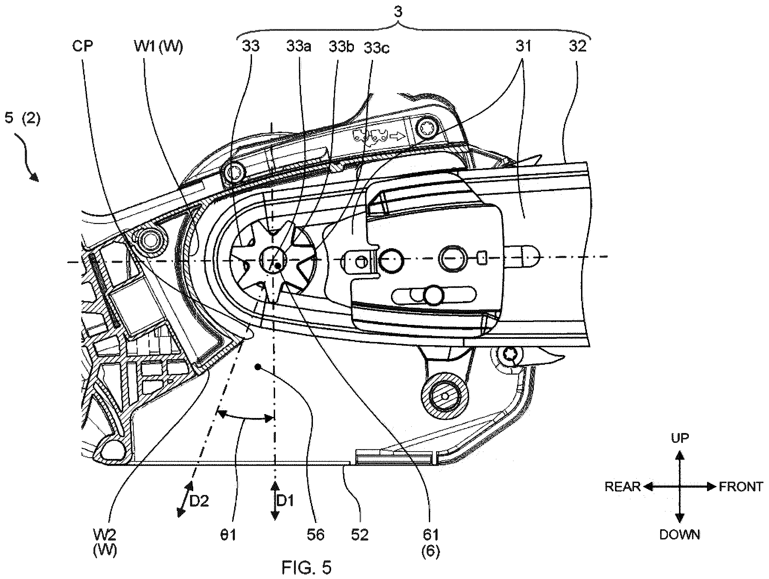

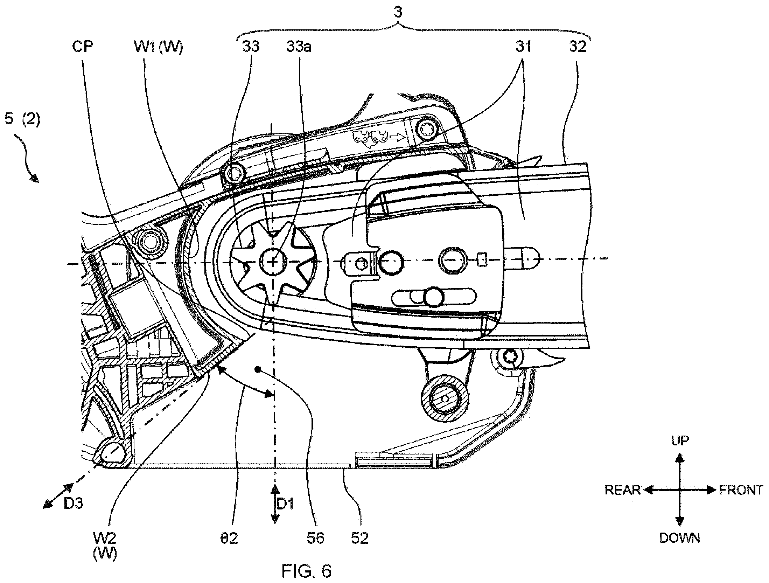

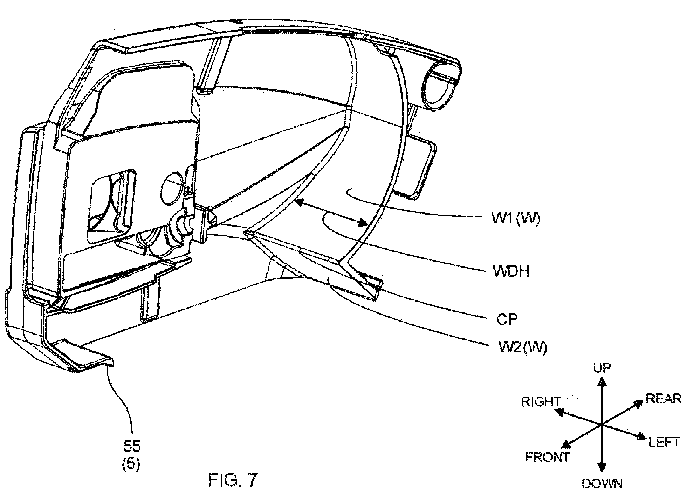

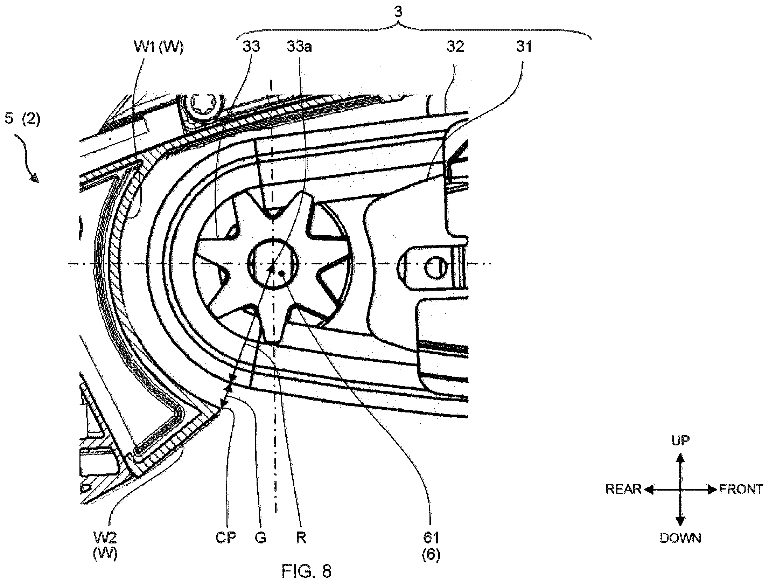

FIG. 1 is a right side view illustrating external appearance of a chainsaw. FIG. 2 is a left side view illustrating the external appearance of the chainsaw. FIG. 3 is a top view illustrating the chainsaw with some components omitted. FIG. 4 is an enlarged perspective view of the chainsaw seen from rear and below for explaining an opening. FIG. 5 is a view of the main body, which is cut along a cross-section A-A of FIG. 3 and seen from a right side, for explaining an angle θ1. FIG. 6 is a view of the main body, which is cut along the cross-section A-A of FIG. 3 and seen from the right side, for explaining an angle θ2. FIG. 7 is a left side view illustrating external appearance of a sprocket cover. FIG. 8 is a view of the main body, which is cut along the cross-section A-A of FIG. 3 and seen from the right side, for explaining a predetermined gap.

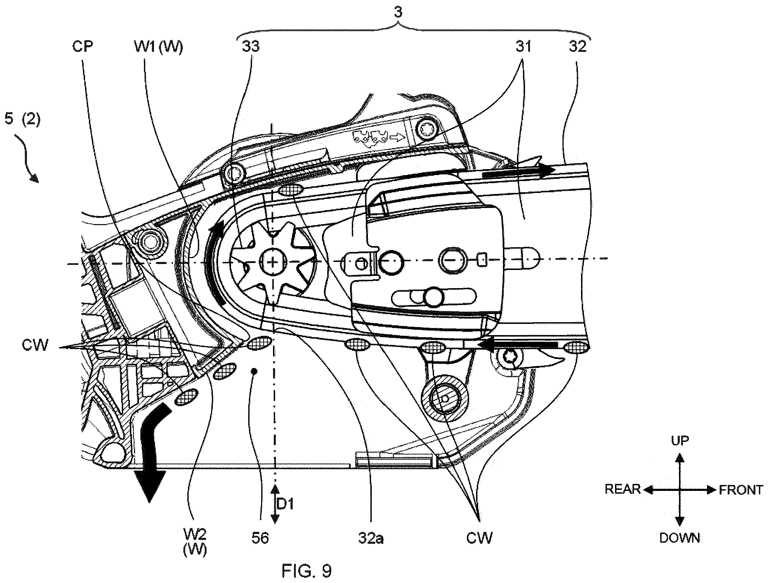

Incidentally, directions of the chainsaw 1 and respective components of the chainsaw 1 will be defined based on "up", "down", "left", "right", "front" and "rear" shown in FIGs. 1 to 8 (also in FIG. 9). Further, in the following explanation, the "up" is also referred to as "above" or "upward" and the "down" as the "below" or "downward". The direction formed by the "up" and "down" is represented as "vertically" or a "vertical direction". These are also applied to "left", "right", "front" and "rear".

The chainsaw 1 illustrated in FIGs. 1 and 2 are a small-sized chainsaw called a top handle saw. This chainsaw 1 is provided with a main body 2 and a battery 8. Further, the main body 2 includes a working portion 3, a handle 4, a housing 5, and a motor 6 and a control unit 7 which are stored in the housing 5.

### (Working portion 3)

The working portion 3 is configured to cut a work target and to be connected with the housing 5. Further, in the configuration shown in the figure, the working portion 3 is a chain-type cutter, which is provided with a guide bar 31, a saw chain 32 and a drive sprocket 33. In other words, the working portion 3, which is a part of the main body 2, includes the guide bar 31, the saw chain 32 and the drive sprocket 33.

As shown in FIGs. 1 and 2, the guide bar 31 is a plate member extended in the front/rear direction, and a rear end of the guide bar 31 is attached to a right front part of the housing 5. As shown in FIG. 5, the guide bar 31 is disposed in front of the drive sprocket 33, and the saw chain 32 is wound around an outer peripheral part of the guide bar 31 and the drive sprocket 33.

The saw chain 32 is configured to have a loop shape, and is provided with blades for cutting a work target on an outer periphery thereof. In a state illustrated in the figure, the saw chain 32 is engaged with the guide bar 31 on a front end side of the guide bar 31, and is engaged with the drive sprocket 33, which is connected to a rotation shaft 61 of motor 6, on a rear end side of the guide bar 31. That is, the saw chain 32 is wound around the guide bar 31 and the drive sprocket 33. In addition, the saw chain 32 is configured to be rotated along the outer periphery of the guide bar 31 and the drive sprocket 33, as the drive sprocket 33 is rotated by rotational power generated by the motor 6.

The drive sprocket 33 has a substantially disc shape, and is provided with a plurality of projections (teeth) 33c, which protrude outward, on the outer periphery thereof. Tips of the projections 33c are configured to be engaged with a part of the saw chain 32. Further, the drive sprocket 33 has a shaft hole 33b in a central part of its substantially disc shape.

The drive sprocket 33 has a rotation shaft 33a at a center of the shaft hole 33b. This rotation shaft 33a is disposed behind the guide bar 31 and along the right/left direction of the main body 2.

In addition, the shaft hole 33b is fitted to the rotation shaft 61 of the motor 6. Thereby, the drive sprocket 33 is configured to be rotated by the rotational power generated by the motor 6. As shown in FIG. 5, specifically, the shaft hole 33b and the rotation shaft 61 are a shaft hole and a shaft, which respectively have flat parts at their front and rear as shown in the figure, whereby the rotation shaft 61 is not rotated in the shaft hole 33b. Then, when the drive sprocket 33 is rotated (clockwise in FIG. 5), the drive sprocket 33 is sequentially engaged with the saw chain 32 at its front lower part, while the engagement with the saw chain 32 is sequentially released in its front upper part. According to such a configuration, the drive sprocket 33 moves the saw chain 32 along the guide bar 31 by being rotated. Incidentally, the shaft hole 33b and the rotation shaft 61 may be any mechanism capable of transmitting rotational power, and may be, for example, a spline mechanism, a mechanism of key and keyway, or the like.

### (Handle 4)

As shown in FIGs. 1 and 2, the handle 4 includes a top handle 41 provided above the housing 5 and a horizontal handle 42 provided on a left side of the housing 5. An operator performs works by gripping the top handle 41 and the horizontal handle 42 in his/her respective hands.

### (Top handle 41)

The top handle 41, which is the handle 4, is disposed above the housing 5. The top handle 41 is formed continuously with an upper surface of the housing 5, and is extended in a front/rear direction above the housing 5. A front side of the top handle 41 is fixed to a front end 53 of the housing 5 that protrudes upward from the housing 5. Incidentally, inside the front end 53 of the housing 5, a drive switch (not shown) is provided. This drive switch controls operations of the working portion 3. Specifically, the drive switch controls rotation speed of the motor 6 according to press-in quantity of a head thereof so as to increase or decrease rotation speed of the saw chain 32. Further, a rear side of the top handle 41 is fixed to a battery detachable portion 54 of the housing 5. When the battery 8 is attached to the battery detachable portion 54, an upper end of the battery 8 protrudes upward above the rear end of the top handle 41.

Between the front end and the rear end of the top handle 41, a gripping portion 411 extended in the front/rear direction is provided. The gripping portion 411 is inclined obliquely downward at a slight angle from the front end to the rear end of the top handle 41. The gripping portion 411 is a part gripped by the operator when he/she holds the chainsaw 11. Into a space between the gripping portion 411 and the upper surface of the housing 5, the hand of the operator is inserted.

On a lower surface of a front end of the gripping portion 411, a trigger lever 412 is arranged as a manipulating means for increasing or decreasing the rotation speed of the saw chain 32. That is, the trigger lever 412 is configured to control operation of the working portion 3 via the drive switch (not shown). The operator can manipulate the trigger lever 412 while gripping the gripping portion 411.

In addition, on an upper surface of the gripping portion 411, a lockout lever 413 is provided displaceably with respect to the trigger lever 412. Specifically, the lockout lever 413 is arranged to be freely retractable with respect to the gripping portion 411 (the top handle 41). When the operator grips the gripping portion 411, a palm of the operator presses and embed the lockout lever 413 into the gripping portion 411. For enabling the manipulation of the trigger lever 412 thereby at the first time, the lockout lever 413 and the trigger lever 412 are operationally connected with each other in the gripping portion 411. According to such a configuration, the trigger lever 412 and the lockout lever 413, both of which are provided in the gripping portion 411, constitute an manipulating mechanism. By manipulating this manipulating mechanism, operations of the working portion 2 can be controlled, that is, the rotation speed of the saw chain 32 can be increased or decreased.

### (Horizontal handle 42)

The horizontal handle 42 is extended in the front/rear direction from a front end to a rear end of a left side surface of the housing 5. The horizontal handle 42 may be made of resin, or may be formed by bending a lightweight metal pipe. The front end of the horizontal handle 42 is attached to a left side surface of the front end of the top handle 41. The rear end of the horizontal handle 42 is disposed behind and below the housing 5, and is attached to a left side wall of the battery detachable portion 54. A part between the front end and the rear end of the horizontal handle 42 is curved so as to bulge outward to the left side surface of the housing 5 (see FIG. 3).

### (Housing 5)

The housing 5 is a box made of resin which stores a machine and electrical equipment for operating the chainsaw 1. As shown in FIG. 2, specifically, the motor 6 and the control unit 7 are stored in the housing 5. Moreover, the housing 5 has the battery detachable portion 54, to which the battery 8 can be attached/detached freely.

As shown in FIG. 1, the battery detachable portion 54 has a tubular shape extended from below to above. Further, the battery detachable portion 54 is formed in a rear part of the housing 5, and is inclined so that a lower part thereof may be positioned more front than an upper part thereof. On the battery detachable portion 54, a connection terminal (not shown) made of metal is provided. The connection terminal is electrically connected to the motor 6 and the control unit 7. Then, a connection terminal of the battery 8 is connected to the connection terminal of the battery detachable portion 54, whereby the battery 8 supplies electric power to the motor 6 and the control unit 7.

Further, as shown in FIG. 3, the housing 5 includes a left cover 51 and a right cover 52, so that the housing 5 can be divided in a right/left direction. When the left cover 51 and the right cover 52 are combined, a space for storing the motor 6 and the control unit 7 is formed.

Furthermore, as shown in FIG. 4, a sprocket cover 55 is attached detachably to a right side surface of the right cover 52. In other words, the main body 2 is provided with the sprocket cover 55. The sprocket cover 55 is a box-shaped member, which is configured to cover components that are disposed in the main body 2. Specifically, the configuration of the sprocket cover 55 is as follows. As shown in FIG. 5, on the right side of the right cover 52, the rotation shaft 61 of the motor 6 which protrudes rightward from the right cover 52; the drive sprocket 33 fitted to a tip part of the rotation shaft 61; the guide bar 31 disposed in front of the drive sprocket 33; and the saw chain 32 wound around the guide bar 31 and the drive sprocket 33 are disposed. Then, the sprocket cover 55 is disposed in the main body 2 so as to cover the rotation shaft 61, the drive sprocket 33, a part of the saw chain 32 and a part of the guide bar 31.

Further, as shown in FIG. 4, the main body 2 has an opening 56 which is opened downward in a state where the sprocket cover 55 is attached to the right cover 52. The opening 56 communicates with a space in which the drive sprocket 33 is disposed, and opens the main body 2 downward.

Further, the sprocket cover 55, which is a part of the main body 2, has a guide wall W. As shown in FIG. 7, specifically, the sprocket cover 55 has the guide wall W on a surface closer to the drive sprocket 33. Further, as shown in FIGs. 5 and 7, the guide wall W is provided with a first wall W1 and a second wall W2. The guide wall W may be provided to the housing 5. In addition, the guide wall W may be configured to be constituted of the housing 5 and the sprocket cover 55, by attaching the sprocket cover 55 to the housing 5.

As shown in FIG. 5, the first wall W1 is a wall formed behind the drive sprocket 33 and the saw chain 32. Further, the first wall W1 is formed along a rear end part of the saw chain 32 which is wound around the drive sprocket 33. As shown in FIG. 8, specifically, a predetermined gap G is provided between the first wall W1 (connecting portion CP) and the saw chain 32 so as to be designed such that the first wall W1 and the saw chain 32 are not in contact with each other. In other words, the first wall W1 is a wall which is provided arcuately along the drive sprocket 33 and is disposed to have the predetermined gap G between the saw chain 32 and the first wall W1. The predetermined gap G shown in FIG. 8 is 6 mm. In detail, the predetermined gap G may be 3 mm or more and 20 mm or less, is preferably 4 mm or more and 15 mm or less, and more preferably 5 mm or more and 10 mm or less. Specifically, the predetermined gap G is, for example, 3 mm, 3.5 mm, 4 mm, 4.5 mm, 5 mm, 5.5 mm, 6 mm, 6.5 mm, 7 mm, 7.5 mm, 8, mm 8.5 mm, 9 mm, 9.5 mm, 10 mm, 10.5 mm, 11 mm, 11.5 mm, 12 mm, 12.5 mm, 13 mm, 13.5 mm, 14 mm, 14.5 mm, 15 mm, 15.5 mm, 16 mm, 16.5 mm, 17 mm, 17.5 mm, 18 mm, 18.5 mm, 18.5 mm, 19 mm, 19.5 mm or 20 mm, and may also be in ranges between any two of the values exemplified above.

In addition, the predetermined gap G may also be defined according to an outer diameter R of the saw chain 32 which is wound around the drive sprocket 33. Herein, the outer diameter R is a length from a center of the rotation shaft 33a to an outer periphery of the saw chain 32 which is wound around the drive sprocket 33. Specifically, the predetermined gap G is preferably defined as a predetermined ratio with respect to the outer diameter R (that is, a value obtained by dividing a value of the predetermined gap G by a value of the outer diameter R). The predetermined ratio shown in FIG. 8 is 0.2. In detail, the predetermined ratio may be 0.1 or more and 0.8 or less, is preferably 0.13 or more and 0.5 or less, and more preferably 0.16 or more and 0.3 or less. Specifically, the predetermined ratio is, for example, 0.1, 0.12, 0.14, 0.16, 0.18, 0.2, 0.22, 0.24, 0.26, 0.28, 0.3, 0.32, 0.34, 0.36, 0.38, 0.4, 0.42, 0.44, 0.46, 0.48, 0.5, 0.52, 0.54, 0.56, 0.58, 0.6, 0.62, 0.64, 0.66, 0.68, 0.7, 0.72, 0.74, 0.76, 0.78 or 0.8, and may also be in ranges between any two of the values exemplified above.

As shown in FIG. 5, the second wall W2 is a wall formed behind and below the drive sprocket 33 and the saw chain 32, and underneath the first wall W1. In addition, the second wall W2 is a wall which is connected to the first wall W1 via the connecting portion CP and is extended rearward. That is, the first wall section W1 and the second wall section W2 are connected via the connecting portion CP. A position of the connecting portion CP, that is, a position where the first wall W1 and the second wall W2 are connected may be defined according to a positional relation between the drive sprocket 33 and the saw chain 32. In detail, the position of the connecting portion CP may be defined by an angle θ1 between: a first direction D1 passing through the center of the rotation shaft 33a along the vertical direction of the main body 2; and a second direction D2 passing through the center of the rotation shaft 33a and an apex of the connecting portion CP, when seen from left/right direction (for example, when seen from a right side as shown in FIG. 5). As shown in FIG. 5, specifically, the angle θ1 may be 19°. In detail, the angle θ1 between the first direction D1 and the second direction D2 may be 0° or more and 30° or less, is preferably 10° or more and 25° or less, and more preferably 15° or more and 22° or less. Specifically, the angle θ1 is, for example, 0°, 0.5°, 1°, 1.5°, 2°, 2.5°, 3°, 3.5°, 4°, 4.5°, 5°, 5.5°, 6°, 6.5°, 7°, 7.5°, 8°, 8.5°, 9°, 9.5°, 10°, 10.5°, 11°, 11.5°, 12°, 12.5°, 13°, 13.5°, 14°, 14.5°, 15°, 15.5°, 16°, 16.5°, 17°, 17.5°, 18°, 18.5°, 19°, 19.5°, 20°, 20.5°, 21°, 21.5°, 22°, 22.5°, 23°, 23.5°, 24°, 24.5°, 25°, 25.5°, 26°, 26.5°, 27°, 27.5°, 28°, 28.5°, 29°, 29.5° or 30°, and may also be in ranges between any two of the values exemplified above.

According to such an aspect, sawdust (in particular, even long-fibrous sawdust) conveyed into the interior of the main body 2 by the saw chain 32 can be removed from the saw chain 32 by the guide wall W, whereby the sawdust can be discharged to the exterior of the main body 2 along the second wall W2. In addition, by optimizing the predetermined gap G between the first wall W1 and the saw chain 32, the guide wall W that can discharge the sawdust to the exterior of the main body 2 more effectively can be formed. Furthermore, by disposing the opening 56 in a lower part of the main body 2 so as to communicate with an internal space of the main body 2 in which the drive sprocket 33 is disposed, the sawdust can be discharged via the opening 56 to the exterior of the main body 2. As a result, the chainsaw 1 can be used efficiently. In addition, by providing the guide wall W to the sprocket cover 55, the sawdust conveyed into the interior of the main body 2 can be discharged easily also by attachment/detachment of the sprocket cover 55. That is, the chainsaw 1 can be maintained more efficiently.

Furthermore, as shown in FIG. 6, the second wall W2 may be extended from the connecting portion CP in a third direction D3. Specifically, when seen from the left/right direction (for example, when seen from the right side as shown in FIG. 6), a direction of extending the second wall W2 from the connecting portion CP may be defined by an angle θ2 between the first direction D1 and the third direction D3. As shown in FIG. 6, specifically, the angle θ2 may be 51°. In detail, the angle θ2 between the first direction D1 and the third direction D3 may be 40° or more and 60° or less, is preferably 45° or more and 55° or less, and more preferably 47° or more and 52° or less. Specifically, the angle θ2 is, for example, 40°, 40.5°, 41°, 41.5°, 42°, 42.5°, 43°, 43.5°, 44°, 44.5°, 45°, 45.5°, 46°, 46.5°, 47°, 47.5°, 48°, 48.5°, 49°, 49.5°, 50°, 50.5°, 51°, 51.5°, 52°, 52.5°, 53°, 53.5°, 54°, 54.5°, 55°, 55.5°, 56°, 56.5°, 57°, 57.5°, 58°, 58.5°, 59°, 59.5° or 60°, and may also be in ranges between any two of the values exemplified above. According to such an aspect, by extending the second wall W2 from the connecting portion CP at an optimized angle in the third direction D3, the guide wall W that can discharge the sawdust to the exterior of the main body 2 more effectively can be formed. As a result, the chainsaw 1 can be used more efficiently.

Furthermore, as shown in FIG. 7, the first wall W1 has a predetermined width WDH in the right/left direction. Specifically, the predetermined width WDH is largest at a position of the connecting portion CP, and is gradually decreased with distance upward from the position of the connecting portion CP. That is, the predetermined width WDH is gradually decreased with distance upward from the position of the connecting portion CP along a direction of rotation of the drive sprocket 33. In other words, the predetermined width WDH is configured to be decreased with distance from the connecting portion CP. According to such an aspect, sawdust, which is drawn into the interior of the main body 2 over the connecting portion CP according to movement of the saw chain 32, is pulled upward while being drawn by the saw chain 32 positioned at a center of the first wall W1 in its width direction, then is pulled forward, and is finally discharged to the exterior of the main body 2. In this manner, by optimizing the predetermined width WDH so as to optimize a shape of the first wall W1, the guide wall that can discharge the sawdust, which is conveyed over the connecting portion CP into the interior of the main body 2, to the exterior of the main body 2 can be formed. As a result, the chainsaw 1 can be used further more efficiently.

In addition, the predetermined width WDH at the position of the connecting portion CP is larger than a width of the saw chain 32 in the right/left direction. Specifically, a ratio of the width of the saw chain 32 in the right/left direction to the predetermined width WDH at the position of the connecting portion CP (that is, a value obtained by dividing a value of the predetermined width WDH at the position of the connecting portion CP by a value of the width of the saw chain 32 in the right/left direction) is 3. In detail, the ratio may be 1.2 or more and 5 or less, is preferably 2 or more and 4 or less, and more preferably 2.5 or more and 3.5 or less. Specifically, the ratio is, for example, 1.2, 1.3, 1.4, 1.5, 1.6, 1.7, 1.8, 1.9, 2, 2.1, 2.2, 2.3, 2.4, 2.5, 2.6, 2.7, 2.8, 2.9, 3, 3.1, 3.2, 3.3, 3.4, 3.5, 3.6, 3.7, 3.8, 3.9, 3. 4, 4.1, 4.2, 4.3, 4.4, 4.5, 4.6, 4.7, 4.8, 4.9 or 5, and may also be in ranges between any two of the values exemplified above. According to such an aspect, since the predetermined width WDH (the width of the guide wall W in the right/left direction) at the position of the connecting portion CP is set to be larger than the width of the saw chain 32 in the right/left direction, a gap is formed on at least one of a left side and a right side of the saw chain 32 in the right/left direction at the position of the connecting portion CP. Thereby, at or near the position of the connecting portion CP, the sawdust removed from the saw chain 32 passes through the gap, thereby being discharged to the exterior of the main body 2. As a result, the chainsaw 1 can be used further more efficiently.

### (Motor 6)

As shown in FIG. 5, the motor 6 is a known electric motor, and is configured to generate rotational power for driving the working portion 3. As shown in FIG. 2, the motor 6 is provided with the rotation shaft 61. As shown in FIG. 5, the rotation shaft 61 is extended in the right/left direction, and a right part of the rotation shaft 61 is connected to the drive sprocket 33.

### (Control unit 7)

As shown in FIG. 2, the control unit 7 has a box shape, and is fixed to the housing 5. The control unit 7 is electrically connected to the motor 6 and the battery 8 via wiring, a connector or the like so as to control electrification from the battery 8 to the motor 6. The control unit 7 is configured to electrically control the rotation of the motor 6.

### (Battery 9)

As shown in FIG. 1, the battery 8 is a known battery, which is configured to store a secondary battery such as a lithium ion battery in a rectangular parallelepiped case extended in the upper/lower direction. The battery 8 is formed to have a height that is larger than a height of a rear end of the housing 5. Such a battery 8 has a size larger than that of a battery in a type to be stored in the housing 5. Then, the battery 8 has sufficiently high output and charging capacity suitable for work.

When attaching the battery 8 to the battery detachable portion 54, the battery 8 is fitted to the battery detachable portion 54 by sliding the battery 8 from above to below with respect to the battery detachable portion 54. Then, when the battery 8 is moved to a position where the battery 8 is supported by the battery detachable portion 54, an engagement portion of the battery 8 is engaged with the battery detachable portion 54 so as to be fixed to the battery detachable portion 54.

The battery 8 attached to the battery detachable portion 54 is disposed to be inclined such that a lower part thereof may be positioned more forward than an upper part thereof. The battery 8 is provided with the connection terminal (not shown) and is fixed to the battery detachable portion 54, whereby the connection terminal of the battery 8 and the connection terminal (not shown) of the battery detachable portion 54 are electrically connected. Then, by connecting the connection terminal of the battery 8 to the connection terminal of the battery detachable portion 54, the battery 8 supplies electric power to the motor 6 and the control unit 7.

For detaching the battery 8 from the battery detachable portion 54, when the connecting lever (not shown) of the battery 8 is pulled up, the engaged state between the battery detachable portion 54 and the engagement portion is released, whereby the battery 8 can be slid upward with respect to the battery detachable portion 54.

### 2. Condition of using chainsaw 1

Next, a condition of using the chainsaw 1 will be explained with reference to other figures. FIG. 9 is a view of the main body, which is cut along the cross-section A-A of FIG. 3 and seen from the right side, for explaining an example of the condition of use. Specifically, FIG. 9 mainly illustrates relations between the saw chain 32, the guide wall W, the opening 56 and the sawdust CW when the chainsaw 1 is used. Details of this relations will be described below.
[1] The chainsaw 1 can cut a work target by bringing the blade provided on the outer periphery of the saw chain 32 into contact with the work target. At that time, the sawdust CW, which is a part of the work target that is cut, are caught in the blade of the saw chain 32, and are conveyed into the interior of the main body 2 according to movement of the saw chain 32 in such a state.
[2] The sawdust CW conveyed into the interior of the main body 2 is removed from the saw chain 32 by external force, or is moved to the exterior of the main body 2 again while being caught in the saw chain 32. The external force in this case means, for example, external force such as inertial force caused by the movement of the saw chain 32 along the drive sprocket 33 and centrifugal force, external force caused by contact with a part of the main body 2 or the like.
[3] Specifically, the sawdust CW conveyed into the interior of the main body 2 is likely to be removed from the saw chain 32 by the external force such as inertial force and centrifugal force, at a position where the saw chain 32 changes its movement from linear movement to curvilinear movement along the drive sprocket 33 or a position where a degree of the change is increased. As shown in FIG. 9, in detail, the sawdust CW conveyed into the interior of the main body 2 is likely to be removed from the saw chain 32 at and near a position 32a. In this case, the position 32a is a position where the outer periphery of the saw chain 32 below the drive sprocket 33 intersects with the first direction D1.
[4] Further, in the main body 2, the connecting portion CP is disposed behind the position 32a. Thereby, the sawdust CW removed from the saw chain 32 by the external force such as inertial force and centrifugal force collides with the connecting portion CP. Alternatively, by bringing a part of the sawdust CW in contact with the connecting portion CP while the part of the sawdust CW is caught in the saw chain 32, external force is generated to the sawdust CW, thereby removing the sawdust CW from the saw chain 32. The sawdust removed from the saw chain 32 in this manner is moved along the second wall W2 so as to be discharged to the exterior of the main body 2 via the opening 56.
[5] Incidentally, as shown in FIG. 9, a part of the sawdust CW may be moved to the exterior of the main body 2 again, while being caught in the saw chain 32. In this case, the sawdust CW is moved along the first wall W1 to the exterior of the main body 2.

According to such an aspect, the sawdust CW conveyed into the interior of the main body 2 by the saw chain 32 can be removed by the connecting portion CP and the second wall W2, which are the guide wall W, so that the sawdust CW can be discharged along the second wall W2 to the exterior of the main body 2. In addition, the sawdust CW, which is conveyed into the interior of the main body 2 over the connecting portion CP, can be discharged along the first wall W1 to the exterior of the main body 2. As a result, the chainsaw 1 can be used efficiently.

Further, the chainsaw 1 may be provided in each of following aspects.
(1) A chainsaw, comprising a main body, wherein the main body includes a guide bar, a saw chain, a drive sprocket and a guide wall, the saw chain is wound around the guide bar and the drive sprocket, the drive sprocket is configured to: be disposed behind the guide bar and have a rotation shaft in a right/left direction of the main body; and move the saw chain along the guide bar by being rotated, the guide wall includes a first wall and a second wall, wherein the first wall is a wall that is provided arcuately along the drive sprocket, and is disposed with a predetermined gap between the saw chain and the first wall, the second wall is a wall that is extended rearward via a connecting portion to the first wall, and, when seen from the right/left direction, an angle between: a first direction passing through a center of the rotation shaft along a vertical direction of the main body; and a second direction passing through the center of the rotation shaft and an apex of the connecting portion is 0° or more and 30° or less.

According to such an aspect, sawdust conveyed into the interior of the main body by the saw chain can be removed from the saw chain by the guide wall, whereby the sawdust can be discharged to the exterior of the main body along the second wall. As a result, the chainsaws can be used efficiently.

(2) The chainsaw according to (1), wherein the second wall is extended from the connecting portion in a third direction, and, when seen from the right/left direction, an angle between the first direction and the third direction is 40° or more and 60° or less.

According to such an aspect, by extending the second wall from the connecting portion at an optimized angle in the third direction, the guide wall that can discharge the sawdust to the exterior of the main body more effectively can be formed. As a result, the chainsaw can be used further more efficiently.

(3) The chainsaw according to (1) or (2), wherein the first wall has a predetermined width in the right/left direction, and is configured such that the predetermined width is decreased with distance from the connecting portion.

According to such an aspect, by optimizing the predetermined width so as to optimize a shape of the first wall, the guide wall that can discharge the sawdust, which is conveyed over the connecting portion into the interior of the main body, to the exterior of the main body can be formed. As a result, the chainsaw can be used further more efficiently.

(4) The chainsaw according to any one of (1) to (3), wherein the predetermined gap has 3 mm or more and 20 mm or less.

According to such an aspect, by optimizing the predetermined gap between the first wall and the saw chain, the guide wall that can discharge the sawdust to the exterior of the main body more effectively can be formed. As a result, the chainsaw can be used more efficiently.

(5) The chainsaw according to any one of (1) to (4), wherein the main body further includes an opening, and the opening communicates with a space in which the drive sprocket is disposed, and opens the main body downward.

According to such an aspect, sawdust conveyed into the interior of the main body by the saw chain can be discharged via the opening to the exterior of the main body. As a result, the chainsaw can be used efficiently.

(6) The chainsaw according to any one of (1) to (5), wherein the main body further includes a sprocket cover, the sprocket cover is configured to: be disposed to cover the drive sprocket, a part of the saw chain and a part of the guide bar, and have the guide wall on a surface closer to the drive sprocket.

According to such an aspect, the sprocket cover has the guide wall, whereby the chainsaw can be maintained more efficiently.

Of course, the present disclosure is not limited to the above.

As described above, although various embodiments of the present invention have been described, these are presented as examples and are not intended to limit the scope of the present invention. Other novel embodiments may be implemented in various forms, and various omissions, substitutions, and modification may be made within the scope of invention without departing from the spirit of the present invention. The embodiments or modifications thereof are included in the scope and spirit of the present invention, as well as within the scope of the invention and equivalents thereof recited in the claims.

### [Example]

Hereinafter, the present disclosure will be explained more specifically by way of Example and Comparative Examples, but is not limited to these examples.

### 1. Preparation of chainsaw

### (Example)

A sprocket cover 55 having a guide wall W on a surface closer to a drive sprocket 33 was manufactured. In this sprocket cover 55, an angle θ1 between a first direction D1 and a second direction D2 was 19°, an angle θ2 between the first direction D1 and a third direction D3 was 51°.

Next, the manufactured sprocket cover 55 was used to assemble a chainsaw. Incidentally, a gap G between a first wall W1 and the saw chain 32 was 6 mm.

### (Comparative Example 1)

A chainsaw was assembled similarly to that of Example except that an angle θ1 was 34°, an angle θ2 was 26°, and a gap G was 6 mm.

### (Comparison Example 2)

A chainsaw was assembled similarly to that of Example except that an angle θ1 was 83°, an angle θ2 was 83°, and a gap G was 20 mm.

### 2. Evaluation

Using the chainsaws prepared in Example and Comparative Examples 1 and 2, substantially same work targets were cut respectively. Specifically, the work targets were cut along fibers of wood, such that long-fibrous sawdust W were generated.

Then, evaluation was performed in accordance with following criteria.

### [Evaluation criteria]

A: Sawdust CW does not clog an interior of the chainsaw, and the chainsaw was able to continue cutting a work target with no interruption.
B: Sawdust CW slightly clogs the interior of the chainsaw, but the chainsaw was able to continue cutting the work target with no interruption.
C: Sawdust CW slightly clogs the interior of the chainsaw, whereby the cutting of the work target had to be interrupted at a low frequency (about once every 10 minutes).
D: Sawdust CW heavily clogs the interior of the chainsaw, whereby the cutting of the work target had to be interrupted at a moderate frequency (about once every 5 minutes).
E: Sawdust CW heavily clogs the interior of the chainsaw, whereby the cutting of the work target had to be interrupted at a high frequency (about once every 2 minutes).

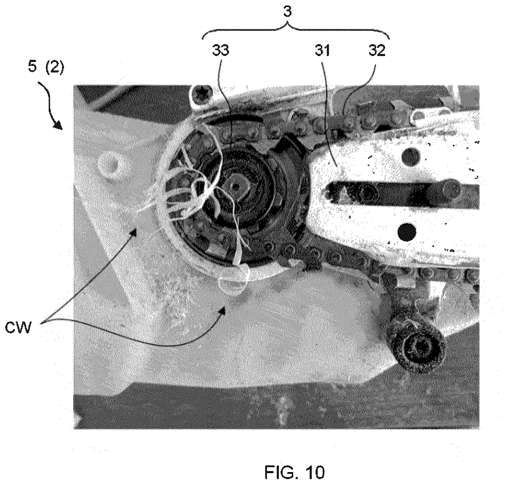

A result of Example is shown in FIG. 10. FIG. 10 is a photograph showing a condition of discharging sawdust CW conveyed into an interior of the main body in Example. FIG. 10 shows the main body 2 with the sprocket cover 55 detached, which is seen from a right side. As shown in FIG. 10, the chainsaw of Example is evaluated as A.

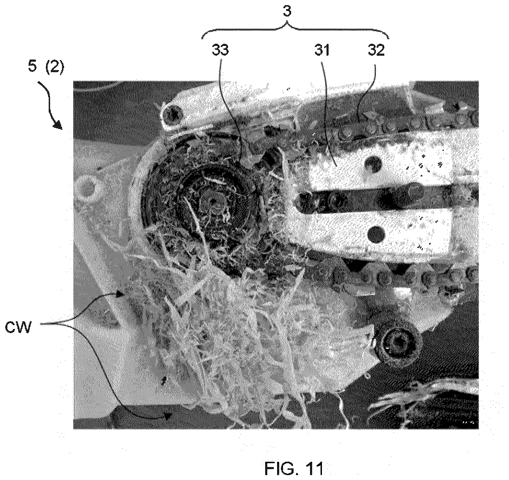

A result of Comparative Example is shown in FIG. 11. FIG. 11 is a photograph showing a condition of discharging sawdust CW conveyed into the interior of the main body in Comparative Example 1. Similarly to FIG. 10, FIG. 11 also shows the main body 2 with the sprocket cover 55 detached, which is seen from a right side. As shown in FIG. 10, the chainsaw of Comparative Example 1 is evaluated as C.

Furthermore, the chainsaw of Comparative Example 2 is evaluated as E.

That is, in Example, compared with Comparative Examples 1 and 2, the sawdust CW conveyed into the interior of the chainsaw was discharged to the exterior of the chainsaw without clogging. As a result, the chainsaw was able to be used efficiently.

## Claims

1. A chainsaw, comprising a main body, wherein
the main body includes a guide bar, a saw chain, a drive sprocket and a guide wall,
the saw chain is wound around the guide bar and the drive sprocket,
the drive sprocket is configured to:
be disposed behind the guide bar and have a rotation shaft in a right/left direction of the main body; and
move the saw chain along the guide bar by being rotated,
the guide wall includes a first wall and a second wall, wherein
the first wall is a wall that is provided arcuately along the drive sprocket, and is disposed with a predetermined gap between the saw chain and the first wall,
the second wall is a wall that is extended rearward via a connecting portion to the first wall, and,
when seen from the right/left direction, an angle between: a first direction passing through a center of the rotation shaft along a vertical direction of the main body; and a second direction passing through the center of the rotation shaft and an apex of the connecting portion is 0° or more and 30° or less.

2. The chainsaw according to claim 1, wherein
the second wall is extended from the connecting portion in a third direction, and,
when seen from the right/left direction, an angle between the first direction and the third direction is 40° or more and 60° or less.

3. The chainsaw according to claim 1 or 2, wherein
the first wall has a predetermined width in the right/left direction, and is configured such that the predetermined width is decreased with distance from the connecting portion.

4. The chainsaw according to any one of claims 1 to 3, wherein
the predetermined gap has 3 mm or more and 20 mm or less.

5. The chainsaw according to any one of claims 1 to 4, wherein
the main body further includes an opening, and
the opening communicates with a space in which the drive sprocket is disposed, and opens the main body downward.

6. The chainsaw according to any one of claims 1 to 5, wherein
the main body further includes a sprocket cover,
the sprocket cover is configured to:
be disposed to cover the drive sprocket, a part of the saw chain and a part of the guide bar, and
have the guide wall on a surface closer to the drive sprocket.
